**Europäisches Patentamt**

**European Patent Office**

**Office européen des brevets**

(19)

(11) Veröffentlichungsnummer: **0 220 165**
A2

(12) **EUROPÄISCHE PATENTANMELDUNG**

(21) Anmeldenummer: **86890284.2**

(22) Anmeldetag: **20.10.86**

(51) Int. Cl.⁴: **B 23 P 11/00**
**B 21 K 25/00, F 16 B 39/02**

(30) Priorität: **21.10.85 AT 3046/85**

(43) Veröffentlichungstag der Anmeldung:
**29.04.87 Patentblatt 87/18**

(84) Benannte Vertragsstaaten:
**AT BE CH DE FR GB IT LI LU NL SE**

(71) Anmelder: **Bombardier-Rotax-Wien Produktions- und Vertriebsgesellschaft m.b.H.**
**Donaufelder Strasse 73-79**
**A-1210 Wien(AT)**

(72) Erfinder: **Ranner, Dietrich, Dipl.-Ing.**
**Schwaighofen-Egg**
**A-5301 Eugendorf Salzburg(AT)**

(74) Vertreter: **Krause, Ernst, Dipl.-Ing. et al,**
**Dipl.-Ing. Krause, Ernst Dipl. Ing. Casati, Wilhelm Patentanwälte Amerlingstrasse 8**
**A-1061 Wien(AT)**

(54) **Verfahren zum Sichern eines Schraubbolzens, insbesondere eines Stiftschraubbolzens, in einer Gewindebohrung eines Werkstückes, Schraubbolzen und Werkzeug zur Durchführung des Verfahrens.**

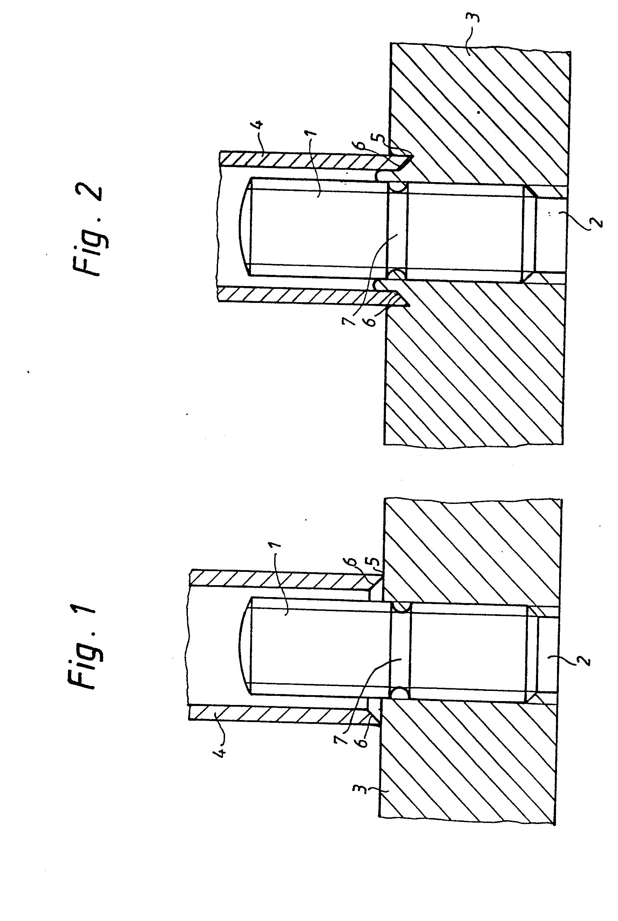

(57) Die Erfindung betrifft die Sicherung eines Schraubbolzens (1) (Stiftschraube) in einem Werkstück (3) durch Verformen des Materials des Werkstückes (3) gegen den Schraubbolzen (1) im Bereich der Einschrauböffnung der Gewindebohrung (2). Zur Verformung des Materials wird zwechmäßig ein hülsenförmiges Werkzeug (4) mit konischer, nach innen abfallender Stirnfläche (6) verwendet. Der Schraubbolzen kann eine Ringnut (7) besitzen, in die das Material des Werkstückes (3) hineinverformt wird (Figur 2).

*Fig. 2*

EP 0 220 165 A2

<u>Verfahren zum Sichern eines Schraubbolzens, insbesondere
eines Stiftschraubbolzens in einer Gewindebohrung eines
Werkstückes, Schraubbolzens und Werkzeug zur Durchführung
des Verfahrens</u>

Die Erfindung betrifft ein Verfahren zum Sichern
eines Schraubbolzens in einer Gewindebohrung eines Werkstückes.

Es gibt bereits zahlreiche Sicherungskonstruktionen,
um Schraubbolzen und Muttern gegen im Betrieb auftretende Kräfte, z.B. bei Erschütterungen, in ihrer gegenseitigen Lage zu sichern. Beispielsweise seien hier
Querschlitzmuttern erwähnt, bei welchen - nachdem die
Mutter in die gewünschte Lage am Schraubbolzen gebracht
wurde - der Querschlitz, z.B. mittels einer Madenschraube,
erweitert wird, wodurch es zu einer Längsverspannung von
Mutter- und Bolzengewinde kommt. Auch Sicherungen durch
Querverspannung des Gewindes gibt es. Hiezu gehören etwa
die sogenannten Festsitzgewinde, die auch als "strammgehende" Gewinde bekannt sind. Solche Festsitzgewinde
oder strammgehenden Gewinde finden etwa bei einfachen
Stiftschraubensicherungen Verwendung. Für hochbeanspruchte
Stiftschrauben sollte jedoch eine Längsverspannung erfolgen. Erreicht wird dies durch Vorsehen eines gewindelosen Abschnittes zwischen dem Gewinde, auf welches die
Mutter aufgeschraubt wird und dem Gewindeabschnitt, mit
dem die Stiftschraube in das Werkstück eingeschraubt wird.
Beide oberwähnten Sicherungen für Stiftschrauben konnten
jedoch in der Praxis nicht voll befriedigen, insbes. nicht
in jenen Fällen, wo die Stiftschraube einem groben Betrieb ausgesetzt ist, beispielsweise in Ketten von Pistenfahrzeugen. Hier Abhilfe zu bringen und eine Methode zu
schaffen, mit der eine rasche Befestigung der Stiftschrauben im Werkstück möglich ist und ein sicherer Halt der Stiftschrauben im Werkstück gesichert ist, ist Aufgabe der Erfindung. Zur Lösung wird vorgeschlagen, daß erfindungsgemäß nach dem Einschrauben des Schraubbolzens in die Gewindebohrung, Material des Werkstückes im Bereich des Bohrungsrandes gegen den Schraubbolzen, insbes. rund um den Schraubbolzen, verformt bzw. verdrängt wird. Durch Anwendung des erfindungsgemäßen Verfahrens wird die Öffnung im Werkstück, durch welche der Schraubbolzen ausgeschraubt werden könnte, verengt und der Schraubbolzen in diesem Bereich geklemmt, so daß ein Verdrehen des Schraubbolzens unmöglich oder zumindest so erschwert wird, daß ein selbsttätiges Lösen praktisch auszuschließen ist. Je größer der Klemmbereich in Unfangsrichtung und in der Tiefe (in Achsrichtung des Schraubbolzens) ist, umso fester sitzt der Schraubbolzen in der Gewindebohrung des Werkstückes. Die Materialverdrängung kann dabei auch örtlich, z.B. durch Schläge mittels eines Körners erfolgen.

Besonders zweckmäßig ist es, zur Verdrängung des Materials des Werkstückes gegen den Schraubbolzen, ein Werkzeug einzusetzen, das in besonderer Ausgestaltung als über den Schraubbolzen stülpbare Hülse ausgebildet ist, wobei eine Stirnfläche der Hülse gegen das Hülseninnere abfallend, bevorzugt konisch, unter Ausbildung einer Schneide entlang des Außenrandes der Stirnfläche zugeschärft ist. Die Schneide erlaubt dabei ein leichtes Eindringen des Werkzeuges in axialer Richtung der Hülse unter der Wirkung von Hammerschlägen auf die ungeschärfte Stirnfläche der Hülse. Die Schrägflächen, die von der Schneidkante ausgehen, verdrängen das Material des Werkstückes gegen den Gewindebolzen, wodurch der Gewindebolzen in der Gewindebohrung geklemmt wird.

Für die Anwendung des erfindungsgemäßen Verfahrens erweist sich eine Schraubbolzengestaltung als besonders vorteilhaft, bei der zwischen den Stirnflächen des Schraubbolzens eine rundumlaufende, insbes. torusförmige Nut angeordnet ist. Das Material des Werkstückes, in welches der Schraubbolzen eingeschraubt ist, kann in die Ringnut hineinverformt werden, wodurch ein besonders guter Halt des Schraubbolzens im Werkstück erzielt wird.

In weiterer Ausgestaltung des Schraubbolzens kann vorgesehen werden, daß der Durchmesser des Nutgrundes den Kerndurchmesser des Schraubbolzens nicht wesentlich unterschreitet. Durch diese Ausgestaltung wird sichergestellt, daß durch das Anbringen der Ringnut keine zu große Schwächung des Querschnittes des Schraubbolzens eintritt. Durch eine torusartige Gestaltung der Nut gelingt es, Kerbspannungen zu vermindern.

Die Erfindung wird nachstehend beispielsweise anhand der Zeichnung näher erläutert. Die Fig. 1 und 2 zeigen jeweils im Längsschnitt zwei unterschiedliche Lagen im Ablauf des erfindungsgemäßen Verfahrens.

In der Zeichnung ist mit 1 der in einer Gewindebohrung 2 eines Werkstückes 3 zu sichernde Schraubbolzen bezeichnet. Das zur Herstellung der Sicherung zu verwendende Werkzeug ist mit 4 bezeichnet. Dieses Werkzeug ist als Hülse ausgebildet, deren Innendurchmesser etwas größer als der Außendurchmesser des Schraubbolzens 1 ist. Eine Stirnfläche der Hülse ist gegen das Innere der Hülse abfallend ausgebildet, so daß entlang des Außenrandes der Stirnfläche eine Schneide 5 gebildet ist, von der eine Kegelfläche 6 abfällt.

Der Schraubbolzen 1 besitzt eine rundumlaufende Nut 7. Der Nutengrund fällt etwa mit dem Kerndurchmesser des Schraubbolzens 1 zusammen. Bei der Herstellung der Sicherung wird, nachdem der Schraubbolzen 1 in die Gewindebohrung 2 eingeschraubt wurde, das Werkzeug 4 über den aus dem Werkstück 3 vorstehenden Schraubbolzen 1 gestülpt, bis die Schneide 5 auf dem Werkstück 3 aufruht. Durch einige Schläge wird das Werkzeug 4 mit seiner Schneide 5 in das Material des Werkstückes 3 eingetrieben. Die Kegelfläche 6 verdrängt dabei das Material des Werkstückes 3 im Bereich des Schraubbolzens gegen den Schraubbolzen 1, wodurch dieser im Bereich der Öffnung der Gewindebohrung 2 geklemmt wird. Bevorzugt wird der Schraubbolzen 1 soweit in das Werkstück 3 eingeschraubt, daß das Werkzeug 4 das Material des Werkstückes 3 in die Nut 7 verdrängt, wie dies Fig. 2 zeigt.

Das Verdrängen des Materials gegen den Schraubbolzen 1, nachdem dieser in das Werkstück 3 eingeschraubt wurde, kann auch mit anderen Werkzeugen als dem dargestellten hülsenförmigen Werkzeug 4 erfolgen, z.B. mittels eines Meißels, eines Körners, eines Stichels od.dgl. In diesem Fall kann eine punktförmige (lokale) Verdrängung des Materials des Werkstückes 3 gegen den Schraubbolzen 1 erfolgen.

Patentansprüche:

1. Verfahren zum Sichern eines Schraubbolzens, insbesondere eines Stiftschraubenbolzens, in einer Gewindebohrung eines Werkstückes, dadurch gekennzeichnet, daß, nach dem Einschrauben des Schraubbolzens in die Gewindebohrung, Material des Werkstückes im Bereich des Bohrungsrandes gegen den Schraubbolzen, insbes. rund um den Schraubbolzen, verformt bzw. verdrängt wird.

2. Verfahren nach Anspruch 1, dadurch gekennzeichnet, daß zur Verformung bzw. Verdrängung des Materials ein Werkzeug in Form einer über den Schraubbolzen stülpbaren Hülse verwendet wird, wobei eine Stirnfläche der Hülse gegen das Hülseninnere abfallend, bevorzugt konisch, unter Ausbildung einer Schneide entlang des Außenrandes der Stirnfläche, zugeschärft ist, daß diese Hülse über dem aus dem Werkstück vorstehenden Schraubbolzen so gestülpt wird, daß die Schneide auf dem Werkstück aufruht, und daß dann durch einige Schläge auf die ungeschärfte Stirnfläche der Hülse deren Schneide in das Material des Werkstückes eingetrieben wird.

3. Schraubbolzen für die Durchführung des Verfahrens nach Anspruch 1 od. 2 dadurch gekennzeichnet, daß er zwischen seinen Stirnflächen eine rundumlaufende, insbes. torusförmige Nut (7) aufweist.

4. Schraubbolzen nach Anspruch 3 dadurch gekennzeichnet, daß sein Durchmesser am Nutgrund nicht wesentlich kleiner ist als sein Kerndurchmesser ($D_k$).

5. Werkzeug zur Durchführung des Verfahrens nach Anspruch 1 od. 2, dadurch gekennzeichnet, daß es als über den Schraubbolzen (1) stülpbare Hülse (4) ausgebildet ist, wobei eine Stirnfläche (6) der Hülse (4) gegen das Hülseninnere abfallend, bevorzugt konisch, unter Ausbildung einer Schneide entlang des Außenrandes der Stirnfläche, zugeschärft ist.

# Fig. 1

# Fig. 2

0220165